# EUROPEAN PATENT APPLICATION

(11) **EP 1 533 632 A1**
(43) Date of publication of application: **25.05.2005**
(21) Application number: 04027420.1
(22) Date of filing: 18.11.2004
(51) Int. Cl.: G02B 6/00

(54) **Area light source apparatus and liquid crystal display**

(30) Priority: 21.11.2003 JP 2003393132
(71) Applicant: Kabushiki Kaisha Toyota Jidoshokki, Kariya-shi, Aichi-ken (JP)
(72) Inventor: Takeuchi, Norihito, K.K.Toyota Jidoshokki, Kariya-shi Aichi-ken (JP)
(74) Representative: Leson, Thomas Johannes Alois, Dipl.-Ing.

(57) **Abstract**

An area light source apparatus (11) including a light emitting surface. The area light source apparatus is provided with a first area light source (14) including a transparent substrate (12), having a light entering surface (12a), and an EL device (13), arranged on the light entering surface. The EL device includes a light emitting surface from which light exits. A second area light source (15) includes LEDs (21). The light emitting surface of the area light source apparatus has an area greater than that of the light emitting surface of the EL device.

## Description

This application is based upon and claims the benefit of priority from prior Japanese Patent Application No. 2003-393132, filed on November 21, 2003, the entire contents of which are incorporated herein by reference.

The present invention relates to an area light source apparatus and a liquid crystal display, and more particularly, to an area light source apparatus and a liquid crystal display employing an EL device.

In the prior art, an EL panel used for illumination and having an electroluminescent (EL) device mounted on a transparent substrate has been proposed. The EL panel may be used as a backlight for a liquid crystal display.

In the prior art, the area of an organic EL panel light emitting surface is the same as the area of a light emitting portion (organic EL layer) of an organic EL device provided on a transparent substrate.

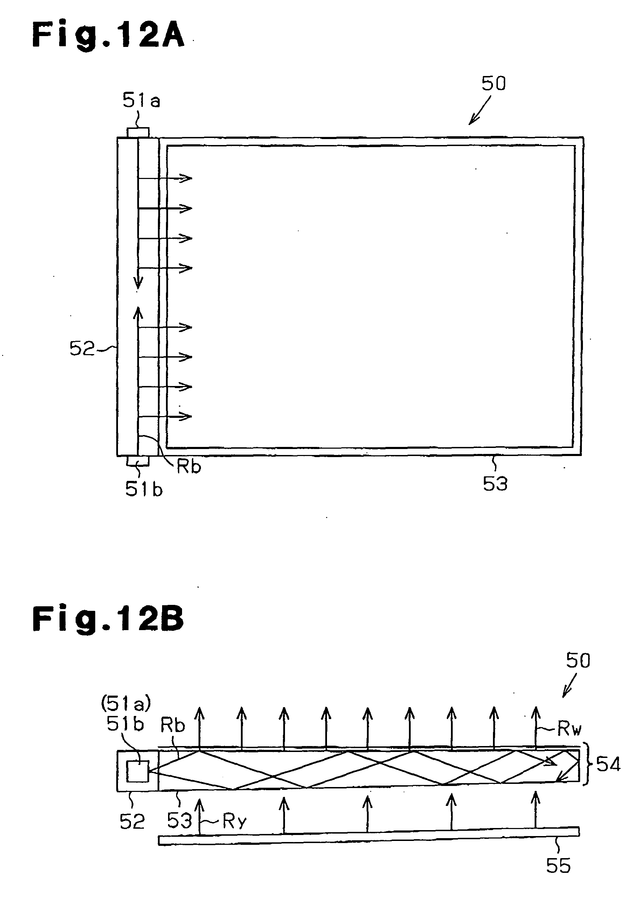

Japanese Laid-Open Patent Publication No. 2002-100229 discloses a light source apparatus 50 used as a backlight for a liquid crystal display. See Figs. 12A and 12B. The light source apparatus 50 includes an upper light source 54 and a lower light source 55. The upper light source 54 includes blue LED light sources 51a and 51b arranged at the opposite ends of a light guide rod 52 and a wedge-shaped light guide plate 53 arranged along the longitudinal axis of the light guide rod 52. As shown in Fig. 12B, the upper light source 54 has a light exiting surface from which white light Rw is emitted and a back surface on the opposite side of the light exiting surface. The lower light source 55 includes an organic EL device emitting yellow light Ry and is arranged on the rear side of the upper light source 54. Blue light Rb generated by the upper light source 54 and yellow light Ry generated by the lower light source 55 are mixed to generate white light Rw within the wedge-shaped light guide plate 53. The white light Rw is emitted from the wedge-shaped light guide plate 53.

When a white LED is used as a backlight for a liquid crystal display, the amount of emitted light is not sufficient. The above-mentioned publication therefore proposes to solve this problem by using two types of light sources, that is, an organic EL device and an LED. White light emission can be obtained by synthesizing the color of light emitted by the LED and the color of light emitted by the organic EL device. The light emitting surface area of the light source apparatus 50 is equal to the light emitting surface area of the organic EL device in the lower light source 55. In order to manufacture a light source apparatus with a large light emitting surface area according to the technique disclosed in the publication, it is required to use an organic EL device having the same light emitting surface area as that of the light source apparatus. However, a typical organic EL layer has a thickness of several tens to several hundreds nanometers. It is thus difficult to form an organic EL layer having a large area with a uniform thickness. Therefore, in the prior art, it is difficult to manufacture a large-area light source apparatus with high yield.

It is an object of the present invention to provide a novel area light source apparatus and liquid crystal display employing an EL device.

One aspect of the present invention is an area light source apparatus including a first light emitting surface. A first area light source includes a transparent substrate, having a light entering surface, and an EL device, arranged on the light entering surface. The EL device includes a second light emitting surface from which light exits. A second area light source includes a light source device other than the EL device. The first light emitting surface has an area greater than that of the second light emitting surface.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a cross sectional view of an area light source apparatus according to a first embodiment of the present invention;
Fig. 2 is a plan view of the area light source apparatus in Fig. 1;
Fig. 3 is a cross sectional view of an area light source apparatus according to a second embodiment of the present invention;
Fig. 4 is a plan view of the area light source apparatus in Fig. 3;
Fig. 5 is a schematic diagram showing the operation of a light extracting surface;
Fig. 6 is a plan view of an area light source apparatus according to a third embodiment of the present invention;
Fig. 7 is a cross sectional view of an area light source apparatus according to a fourth embodiment of the present invention;
Fig. 8A is a plan view of an area light source apparatus according to a fifth embodiment of the present invention;
Fig. 8B is a plan view of an area light source apparatus according to a sixth embodiment of the present invention;
Fig. 9A is a cross sectional view and Fig. 9B is a plan view of an area light source apparatus according to a seventh embodiment of the present invention;
Fig. 10 is a plan view of an area light source apparatus according to an eighth embodiment of the present invention;
Fig. 11 is a cross sectional view of an area light source apparatus according to a ninth embodiment of the present invention; and
Fig. 12A is a plan view and Fig. 12B is a side view, of a light source apparatus in the prior art.

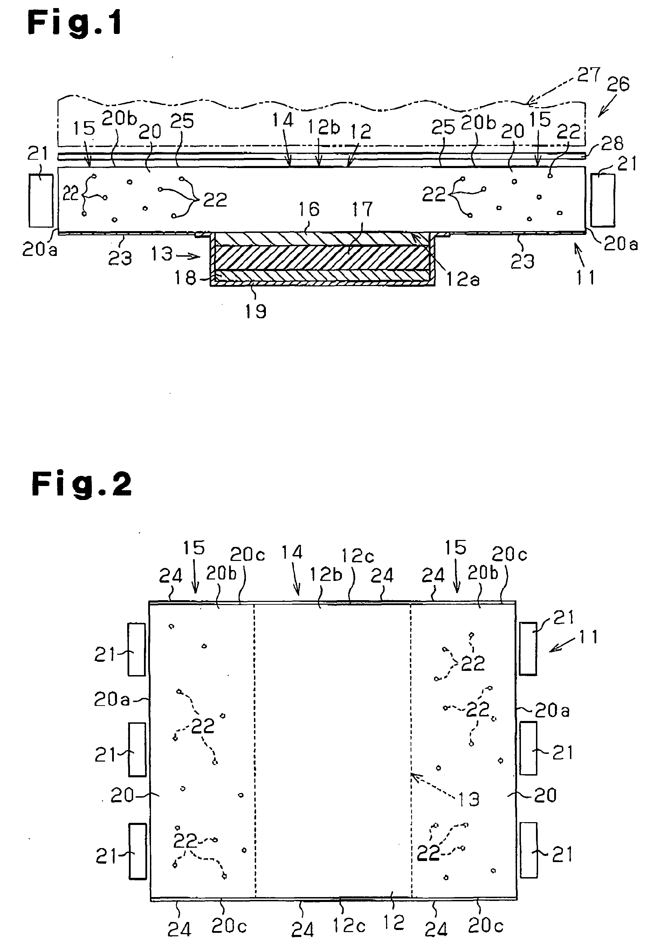

An area light source apparatus according to a first embodiment of the present invention will now be described with reference to Fig. 1 and Fig. 2. The area light source apparatus is used as a backlight for a liquid crystal display. Fig. 1 is a schematic cross sectional view and Fig. 2 is a schematic plan view of the area light source apparatus.

As shown Figs. 1 and 2, the area light source apparatus 11 has a first area light source 14, and second area light sources 15 arranged so that the first area light source 14 is interposed therebetween. The first area light source 14 includes a transparent substrate 12 having a light entering surface 12a and a light exiting surface 12b, and an organic EL device 13 provided on the light entering surface 12a.

The organic EL device 13 includes a first electrode 16, an organic EL layer 17, and a second electrode 18, which are laminated on the light entering surface 12a in this order. The organic EL device 13 is covered with a protective film 19 which protects the organic EL layer 17 from ambient air. The protective film 19 is formed from a material which inhibits transmission of at least moisture (vapor) and oxygen. The protective film 19 may be formed from silicon nitride. Light emitted from the organic EL layer 17 enters the transparent substrate 12 through the light entering surface 12a and exits from the light exiting surface 12b. Therefore, the organic EL device 13 is a bottom emission type.

The first electrode 16 is formed from a transparent conductive material such as indium tin oxide (ITO). The organic EL layer 17 is composed of at least one layer. The organic EL layer 17 may include, for example, three layers comprising a hole injection layer, a light emitting layer, and an electron injection layer, or four layers comprising a hole injection layer, a hole transportation layer, a light emitting layer, and an electron transportation layer, which are laminated in this order on the first electrode 16. The organic EL layer 17 emits white light.

The second electrode 18 is formed from a light reflective metal such as aluminum.

In the first embodiment, the first electrode 16 is an anode, and the second electrode 18 is a cathode.

Each of the second area light sources 15 includes a light guide plate 20. The light guide plates 20 are formed integrally with the transparent substrate 12. That is, a central part of a single glass plate functions as the transparent substrate 12 and the two sides of the glass plate function as the light guide plates 20. As shown in Fig. 2, all of the transparent substrate 12, the organic EL device 13, and the light guide plates 20 have a rectangular shape. The light guide plates 20 may be formed separately from the transparent substrate 12.

Each of the second area light sources 15 includes a plurality of light emitting diodes (LEDs) 21 functioning as light sources other than the EL device. The plurality of LEDs 21 are arranged to face the end face of the light guide plate 20. The plurality of LEDs 21 are spaced from each other by predetermined intervals, for example, by substantially the same distance. The LEDs 21 emit white light. The dimensions of the LEDs 21 are determined so that the LEDs 21 are included within the thickness of the light guide plate 20.

The end face of each light guide plate 20 facing the LEDs 21 functions as a light entering surface 20a for the light guide plate 20. Each light guide plate 20 has a light exiting surface 20b facing the same direction as the light exiting surface 12b of the transparent substrate 12.

The light exiting surface 12b of the transparent substrate 12 and the two light exiting surfaces 20b of the light guide plates 20 together function as the light emitting surface of the area light source apparatus 11. In other words, the area of the light emitting surface of the light source apparatus 11 is the sum of the area of the light exiting surface 12b of the transparent substrate 12 and the areas of the two light exiting surfaces 20b of the light guide plates 20. Therefore, the area of the light emitting surface of the area light source apparatus 11 is larger than the area of the light emitting surface of the organic EL device 13, which is equal to the area of the light exiting surface 12b.

Each light guide plates 20 includes a plurality of light diffusion portions 22 each having a surface for diffusing light entering through the light entering surface 20a. The term "diffusing" herein means reflection or refraction. The light diffusion portions 22 may be scratches formed by irradiation of laser light or portions having a different refractive index from that of the peripheral area. The shape of the light diffusion portions 22 is not limited to any particular shape. It is determined in accordance with the thickness and width of the light guide plates 20 so as to enhance the light extraction efficiency of the light guide plates 20. For example, the light diffusion portions 22 may have a spherical, cylindrical, conical, or bean-like shape. As long as at least part of the external surface of the light diffusion portions 22 is curved, light beams incident on various spots of the light entering surfaces 20a of the light guide plates 20 from the same direction are diffused to various directions according to the positions of the incident spots on the light entering surfaces 20a.

The positions of the plurality of light diffusion portions 22 are not limited particularly, and may be determined so as to enhance the light extraction efficiency of the light guide plates 20. The light diffusion portions 22 may be distributed uniformly or non-uniformly within the light guide plates 20. As shown in Fig. 1, the light diffusion portions 22 may be distributed uniformly within each light guide plate 20 when viewed from the end face of the light guide plate 20. As shown in Fig. 2, the light diffusion portions 22 may be distributed uniformly within the each light guide plate 20 when viewed from the light exiting surface 20b of the light guide plate 20.

The plurality of light diffusion portions 22 may also be distributed non-uniformly when viewed from the end face of the light guide plate 20. For example, many light diffusion portions 22 may be concentrated in a part close to the light exiting surface 20b, in a part close to the opposite side of the light exiting surface 20b, or between the light exiting surface 20b and the opposite surface.

The plurality of light diffusion portions 22 may be formed by applying a method for marking the interior of a transparent material by means of a laser (laser marking method). For example, Japanese Laid-Open Patent Publication No. 2001-276985A discloses a laser marking method in which a high-output laser pulse is focused in the interior of a transparent material such as glass. The nonlinear optical effect caused by the strong photoelectric field of the laser pulse induces local laser absorption. Damage to the transparent material, change in refractive index, or change in density occurs only in the vicinity of the laser focal position. Consequently, the interior of the transparent material is processed without its surfaces being changed.

The light guide plate 20 is mounted on a stage movable in the X, Y, and Z directions, and an operation for focusing laser light at a predetermined depth in the transparent substrate 12 by means of a lens and an operation for moving the stage in the X, Y and Z directions are repeated. This forms a plurality of light diffusion portions 22 at predetermined positions in the light guide plate 20.

The laser light source is, for example, an Nd-YAG laser. A pulse laser is preferable due to its satisfactory controllability in marking. A pulse laser with a short pulse width is particularly preferable since it allows making markings at uniform depths. A laser light source with a pulse width of no more than a sub-nanosecond or a femtosecond laser light source with a pulse width of about 10⁻¹⁵ seconds is particularly useful.

The light diffusion portions 22 may be formed in the light guide plate 20 either before or after the organic EL device 13 is formed on the transparent substrate 12, or in the course of forming the organic EL device 13 (for example, subsequent to the formation of the first electrode 16 on the transparent substrate 12).

A light reflecting portion 23 is disposed on the surface of each light guide plate 20 opposite to the light exiting surface 20b. Among the end faces of each light guide plate 20, the end faces 20c that are orthogonal to the light entering surface 20a are provided with a light reflecting film 24. The light reflecting portions 23 and the light reflecting films 24 are each constituted by a light-reflective metal film. The light-reflective metal may be, for example, aluminum. Each light reflecting film 24 is formed to extend continuously over the corresponding end face 12c of the transparent substrate 12.

The light exiting surface 20b of each light guide plate 20 includes a light diffusion portion 25. The light diffusion portion 25 may be formed by, for example, roughening the light exiting surface 20b by a sand blasting process.

Dimensions and magnification scales of members in the drawings are different from their actual dimensions and magnification scales. Actual thickness of the transparent substrate 12 is about from 0.5 mm to 1 mm. Actual thicknesses of the first electrode 16, the organic EL layer 17, and the second electrode 18 are about from several tens to 1000 nm. Actual thickness of the protective film 19 is larger than the thicknesses of the first electrode 16, the organic EL layer 17, and the second electrode 18.

Next, the operation of the area light source apparatus 11 will be described.

As shown in Fig. 1, the area light source apparatus 11 is used, for example, as a backlight for a transmission-type liquid crystal display 26 when arranged on the rear side (opposite side of the display surface) of a liquid crystal panel 27. A diffusion sheet 28 is provided between the area light source apparatus 11 and the liquid crystal panel 27.

When the area light source apparatus 11 is activated, voltage is applied between the first electrode 16 and the second electrode 18 to emit light from the organic EL layer 17. The voltage is also supplied to the LEDs 21 to emit light. Part of the light emitted from the organic EL layer 17 passes through the first electrode 16, enters the transparent substrate 12, and exits the light exiting surface 12b towards the liquid crystal panel 27. Light emitted by the organic EL layer 17 functions as part of the illumination light of the area light source apparatus 11.

Light emitted by the LEDs 21 enters the associated light guide plate 20. The light exits the light exiting surface 20b of each light guide plate 20 towards the liquid crystal panel 27. Light (illumination light) exiting the light exiting surface 12b of the transparent substrate 12 and the light exiting surface 20b of the light guide plate 20 passes through the diffusion sheet 28 and enters the liquid crystal panel 27. The illumination light enables a user of the liquid crystal display 26 to view the display on the liquid crystal panel 27. The area light source apparatus 11 has a light emitting surface with a larger area than that of the light exiting surface 12b corresponding to the light emitting surface of the organic EL device 13. Thus, the area light source apparatus 11 illuminates a wider area than the area of the light exiting surface 12b.

The operation of the light guide plate 20 will now be described in more detail.

Most of the light emitted from the LEDs 21 enters the light guide plate 20 through the light entering surface 20a. The light passes through the interior of the light guide plate 20 and is refracted or diffused by the light diffusion portions 22 within the light guide plate 20. This alters the travel direction of the light. The alteration of the travel direction by the light diffusion portions 22 causes part of the light to reach the light exiting surface 20b at a smaller angle than the critical angle. This light exits the light exiting surface 20b to illuminate the liquid crystal panel 27. Light of which course is altered by the light diffusion portions 22 to a direction towards the opposite surface to the light exiting surface 20b is reflected by the light reflecting portion 23 towards the light exiting surface 20b and exits the light exiting surface 20b.

Part of the light traveling within the guide plate 20 entering the light exiting surface 20b at an angle larger than the critical angle and is totally reflected by the light exiting surface 20b so that it travels again through the light guide plate 20. Part of this light exits the light exiting surface 20b due to the action of the light diffusion portions 22 and the light reflecting portion 23. Accordingly, the light entering the light guide plate 20 from the LEDs 21 efficiently exits the light exiting surface 20b of the light guide plate 20.

The light reaching the transparent substrate 12 without impinging against the light diffusion portions 22 within the light guide plate 20 travels through the transparent substrate 12. The light then further travels through the other light guide plate 20 towards the corresponding light entering surface 20a. In this light guide plate 20, due to the light diffusion portions 22 and light reflecting portion 23, the light exits the light exiting surface 12b.

The light exiting surface 20b of each light guide plate 20 includes the light diffusion portion 25. If the light exiting surface 20b is not roughened, light entering the light exiting surface 20b at a certain angle would be totally reflected by the light exiting surface 20b. However, the light diffusion portion 25 enables part of the light entering the light exiting surface 20b to exit the light exiting surface 20b. Thus, the light is not totally reflected by the light exiting surface 20b.

In the light entering the transparent substrate 12 from the organic EL device 13, the light entering the light exiting surface 12b at a larger angle than the critical angle does not exit the light exiting surface 12b. Since the organic EL device 13 radiates light in every direction, light entering the transparent substrate 12 from the organic EL device 13 also enters the transparent substrate 12 at various angles. Only part of the light that exits the organic EL device 13 and enters the transparent substrate 12 exits the area light source apparatus 11 from the part of the light exiting surface 12b corresponding to the organic EL device 13. Therefore, in the prior art configuration in which the light exiting surface 12b of the transparent substrate 12 is defined only at portions corresponding to the organic EL device 13, most of the light entering the transparent substrate 12 cannot be used effectively as irradiation light from the area light source apparatus 11.

In the first embodiment, light that does not exit the light exiting surface 12b travels from the transparent substrate 12 into the light guide plate 20 and further travels within the light guide plate 20. The light then exits the light exiting surface 20b due to the light diffusion portions 22 and light reflecting portion 23 of the light guide plate 20. Therefore, light entering the transparent substrate 12 from the organic EL device 13 that would not have been effectively used in the prior art efficiently exits the light exiting surface 20b of the light guide plate 20.

The light diffusion portions 22 and the reflecting portion 23 thus function as light redirecting members.

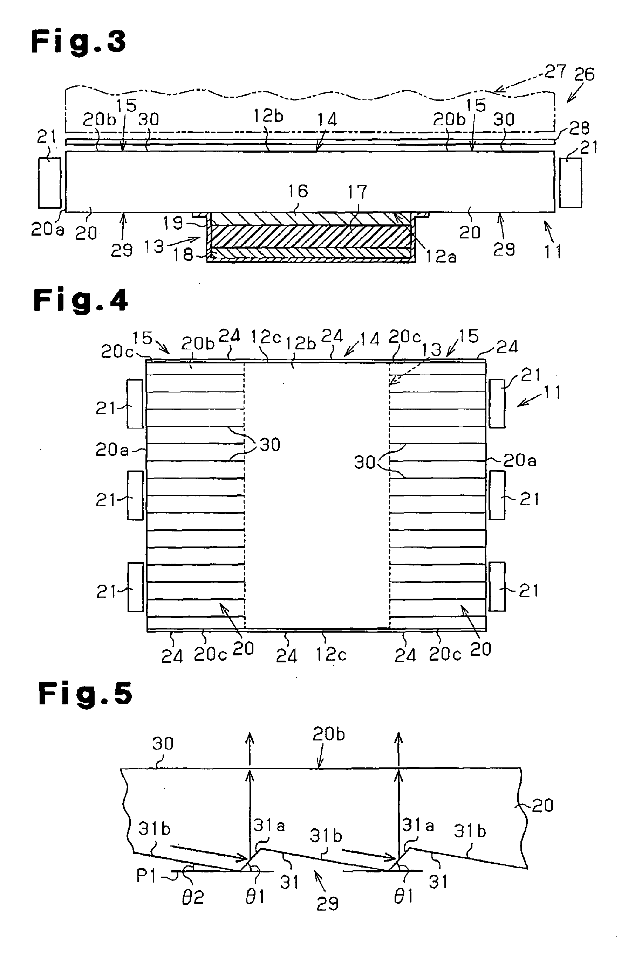

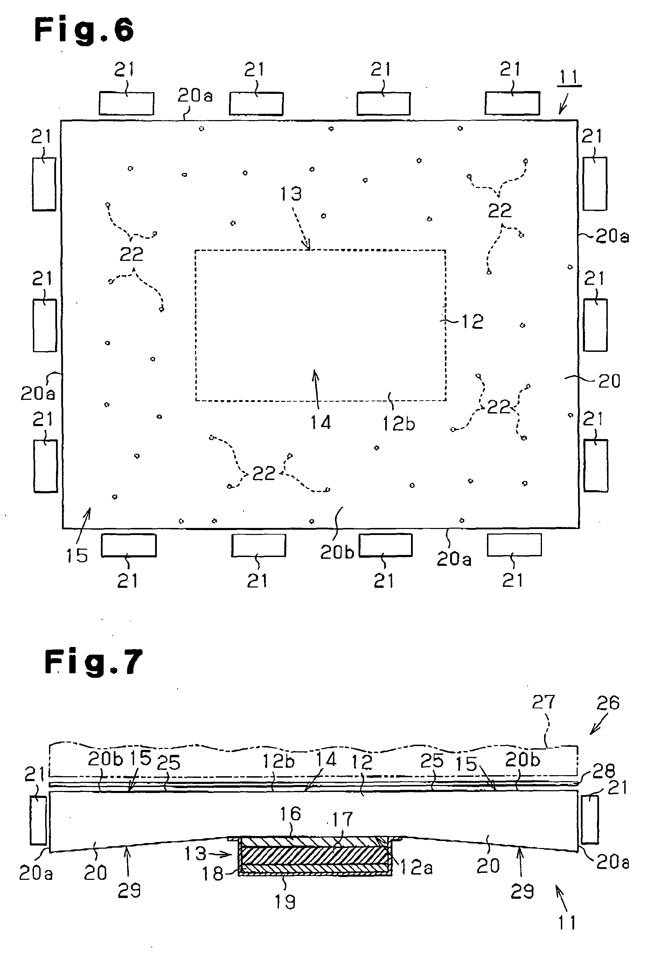

The first embodiment has the advantages describe below.
(1) The area light source apparatus has a first area light source 14 constituted by an organic EL device 13 provided on the light entering surface 12a of the transparent substrate 12 and second area light sources 15 constituted by a light source other than the organic EL device 13 (i.e., LEDs 21). Thus, the area of the entire light emitting surface is larger than the area of the light emitting surface of the organic EL device 13. Accordingly, a wider area than the area of the light emitting surface of the first area light source 14 constituted by the organic EL device 13 is covered by the light from the second area light sources 15. As a whole, a wider area than the area of the light emitting surface of the organic EL device 13 is irradiated.
(2) The second area light sources 15 each include a light guide plate 20 that is optically continuous with the transparent substrate 12. The light sources other than the organic EL device 13 (i.e., LEDs 21) are arranged to face the end face of the each light guide plate 20 and emit light towards the transparent substrate 12. Since the light sources of the second area light sources 15 (i.e., LEDs 21) are not arranged on the surface of a single light guide plate 20 opposite to the light exiting surface12b, the area light source apparatus 11 is thin. The thickness of the organic EL device 13 is so small that it can be ignored when compared to the thickness of the transparent substrate 12 and light guide plate 20. Therefore, as long as the light sources of the second area light sources 15 are of a size that is included in the thickness of the light guide plate 20, it is possible to obtain an area light source apparatus 11 with a thickness substantially equal to that of the transparent substrate 12.
(3) The light source of the second area light source 15 is a light emitting diode (LED 21), and is therefore driven by direct current in the same manner as the organic EL device 13. In contrast, when a cold cathode tube, which is driven by alternate current, is used as a light source, an inverter or the like is required. Accordingly, a light emitting diode (LED 21) requiring no inverter is more preferable than such a cold cathode tube. In addition, a light emitting diode emits light at a low voltage.
(4) A plurality of second area light sources 15 are arranged to sandwich the first area light source 14. Therefore, it is easy to manufacture the area light source apparatus 11 that emits light from the whole light exiting surface uniformly even though the second area light sources 15 are not arranged around the entire periphery of the first area light source 14.
(5) The transparent substrate 12 and the light guide plates 20 are formed integrally by a single glass plate. Therefore, the structure of the area light source apparatus 11 is relatively simple. In addition, since the transparent substrate 12 and the light guide plates 20 have an identical composition, light exits the boundary therebetween without being changed. Therefore, uniform light is emitted.
(6) The light diffusion portions 22 within the light guide plates 20 alter the course of the light directed towards the surface opposite to the light exiting surface 20b. The light is then reflected by the light reflecting portion 23 provided on the surface opposite to the light exiting surface 20b. Part of the light reflected by the light reflecting portion 23 exits the light exiting surface 20b. As a result, a larger amount of light exits the light exiting surface 20b compared to when light is absorbed by or transmitted through the opposite surface to the light exiting surface 20b. The amount of light emitted from the light exiting surface 20b is increased by the synergy of the light diffusion portions 22 and the light reflecting portion 23.
(7) The light diffusion portions 22 and the light reflecting portion 23 also act similarly on part of the light that enters the transparent substrate 12 from the organic EL device 13 and travels within the light guide plate 20 instead of exiting the light exiting surface 12b. Thus, with regard to the light entering the transparent substrate 12 from the organic EL device 13, light that would not have exited the transparent substrate 12 in the prior art is efficiently emitted from the light exiting surface 20b of each light guide plate 20. As a result, the area light source apparatus 11 emits light of higher luminance than a conventional apparatus with the same power consumption. Also, the area light source apparatus 11 consumes less power to emit light of the same luminance.
(8) The light diffusion portions 22 are formed by employing a laser marking method which is capable of processing specific parts of the light guide plate 20 selectively by irradiating the interior of the light guide plate 20 with a laser beam to process the parts focused by the laser beam. Therefore, the light diffusion portions 22 are formed at predetermined positions in the light guide plate 20 without scratching the surface of the light guide plate 20. There is little restriction to the shape or arrangement of the light diffusion portions 22 and a high degree of freedom is provided for designing and processing.
(9) Since the light diffusion portions 22 are formed by employing a laser marking method, they may be formed after the formation of the organic EL device 13. This enables the formation of the light diffusion portions 22 on a defective organic EL device 13 in a wasteful manner.
(10) The light exiting surface 20b of the light guide plate 20 is roughened to form the light diffusion portion 25. If the light exiting surface 20b were flat, light reaching the light exiting surface 20b at a certain angle would be totally reflected and would not exit the light exiting surface 20b. However, due to the presence of the light diffusion portion 25, part of such light exits the light exiting surface 20b. Accordingly, a larger amount of light exits the light exiting surface 20b than when the light exiting surface 20b is flat.
(11) The light reflecting film 24 formed on the end face 20c of the light guide plate 20 and the end face 12c of the transparent substrate 12 reflects light which has traveled within the light guide plate 20 and transparent substrate 12 and reached the end faces 20c and 12c. Thus, the number of chances for light to travel within the light guide plate 20 is increased and thus the amount of light emitted from the light exiting surface 20b is increased.
(12) The second electrode 18 having a light reflecting property is arranged on the side of the organic EL layer 17 opposite to the transparent substrate 12. Since light reflected by the second electrode 18 enters the transparent substrate 12, the amount of light emitted from the light exiting surface 12b increases.
(13) The liquid crystal display 26 has the area light source apparatus 11 functioning as a backlight. Therefore, it is possible to manufacture a liquid crystal display 26 having a large display area more easily and with a higher yield than those conventional display apparatuses having an area light source apparatus employing an organic EL device.
(14) Light exiting the light exiting surface 20b of the light guide plate 20 passes through the diffusion sheet 28 between the area light source apparatus 11 and the liquid crystal display 26 and enters the liquid crystal panel 27. By passing through the diffusion sheet 28, the unevenness in luminance of the light is decreased to a level that is undistinguishable to the naked eye.
   Next, an area light source apparatus 11 according to a second embodiment of the present invention will be described with reference to Figs. 3 through 5. The second embodiment is different from the first embodiment in that each light guide plate 20 has no light diffusion portions 22, a prismatic light reflecting portion 29 is used in place of the flat light reflecting portion 23, and a plurality of prismatic protrusions 30 are provided in a light exiting surface 20b. Similar elements to those of the first embodiment are indicated by the same reference numerals and will not be described in further detail.
   Fig. 5 shows a light reflecting portion 29 formed on a light guide plate 20 located on the left-hand side of the transparent substrate 12 in Fig. 3. The light reflecting portion 29 includes a plurality of inclined light extracting surfaces 31a for reflecting light, which travels through the light guide plate 20 from the light entering surface 20a towards the transparent substrate 12, in the direction in which the light exits the light exiting surface 20b. A waveguide surface 31b is defined between each pair of adjacent light extracting surfaces 31a. The plurality of light extracting surfaces 31a and waveguide surfaces 31b are formed by a plurality of parallel grooves 31. The grooves 31 extend parallel to both light entering surfaces 20a of the light guide plate 20 and to the light exiting surface 20b. Each light extracting surface 31a is inclined so that the light exiting surface 20b becomes closer at positions near the transparent substrate 12 than at positions near the light entering surface 20a. Each waveguide surface 31b is inclined so that the light exiting surface 20b becomes farther at positions near the transparent substrate 12 than at positions near the light entering surface 20a. In other words, the light reflecting portion 29 has a serrated cross sectional shape when viewed along a plane orthogonal to the light entering surfaces 20a and light exiting surface 20b of the light guide plate 20. The light reflecting portion formed in the light guide plate 20 located on the right-hand side of the transparent substrate 12 has light extracting surfaces 31a and waveguide surfaces 31b inclined in the opposite direction from those in Fig. 5.
   An inclination angle θ1 of each light extracting surface 31a is determined so that light that has traveled through the light guide plate 20 towards the transparent substrate 12 and reaching the light extracting surface 31a, is totally reflected by the light extracting surface 31a to a direction substantially orthogonal to the light exiting surface 20b. The inclination angle θ1 is the angle between the light extracting surface 31a and a plane P1 parallel to the light exiting surface 20b. The angle θ1 is a predetermined angle in a range from 35° to 50°, and preferably in a range from 40° to 45°. An inclination angle θ2 of the waveguide surface 31b, that is, an angle between the waveguide surface 31b and the plane P1 is, for example, a predetermined angle in the range from 0.3° to 2.5°. The pitch of the grooves 31 is not more than 1 mm. The grooves 31 are not shown in Fig. 3 or Fig.4.
   The plurality of prismatic protrusions 30 provided in each light exiting surface 20b extend parallel to each other and orthogonally to the light entering surface 20a as shown in Fig. 4. Fig. 4 shows the ridge lines of the protrusions 30. The cross section of each protrusion 30 is substantially triangular. The apexes of the adjacent protrusions 30 are separated by a fixed distance (pitch). The pitch of the protrusions 30 is a certain value in a range from 10 to 500 µm, and preferably in a range from 50 to 300 µm. In the drawings, the magnification scales and the number of the LEDs 21 and protrusions 30 are different from the actual number.
   In the area light source apparatus 11 of the second embodiment, the light entering through the light entering surface 20a into the light guide plate 20 travels within the light guide plate 20 towards the transparent substrate 12. As shown in Fig. 5, the light reaching the light extracting surface 31a is totally reflected by the light extracting surface 31a substantially vertically to the plane P1. The reflected light then travels towards the light exiting surface 20b and exits the light exiting surface 20b. Not all of the light traveling within the light guide plate 20 towards the transparent substrate 12 travels directly to the light extracting surface 31a. Part of the light reaching the light extracting surface 31a travels within the light guide plate 20 and is totally reflected by the waveguide surface 31b and light exiting surface 20b before reaching the light extracting surface 31a. The waveguide surface 31b that is inclined downward from the light entering surface 20a towards the transparent substrate 12 promotes light other than the light traveling towards the light extracting surface 31a to be reflected repeatedly. By the repeated reflection, the travel direction of the light other than the light traveling towards the light extracting surface 31a approaches a state parallel to the plane P1. As a result, the light is totally reflected efficiently by the light extracting surface 31a at an angle substantially vertical to the plane P1 towards the light exiting surface 20b.
   The light reflecting portion functions as a light redirecting member.
   The second embodiment has the advantage described below, in addition to the advantages (1) through (5), and (11) through (14) of the first embodiment.
(15) The light reflecting portion 29 includes a plurality of light extracting surfaces 31a for reflecting light traveling within the light guide plate 20 towards the transparent substrate 12, in the direction in which the light exits the light exiting surface 20b. As a result, light exits efficiently from the light exiting surface 20b without providing any special member in the light guide plate 20.
   An area light source apparatus 11 according to a third embodiment of the present invention will now be described with reference to Fig. 6. The main difference of the third embodiment from the first embodiment is in that a second area light source 15 is arranged to surround the first area light source 14. Similar elements to those of the first embodiment are indicated by the same reference numerals and will not be described in further detail.
   As shown in Fig. 6, a rectangular frame shaped light guide plate 20 surrounds a rectangular transparent substrate 12. A plurality of LEDs 21 are arranged at substantially even intervals to face a corresponding light entering surface 20a of the light guide plate 20. The light exiting surface 20b of the light guide plate 20 includes a light diffusion portion 25 formed by roughening the surface thereof. As with the first embodiment, a light reflecting portion 23 (not shown) is formed on the surface opposite to the light exiting surface 20b. A plurality of light diffusion portions 22 are distributed uniformly within the light guide plate 20.
   When light entering the light guide plate 20 from the LEDs 21 impinges against the light diffusion portions 22 while traveling through the light guide plate 20, the light is refracted or diffused in the same manner as the first embodiment. This alters the travel course of the light. The light which has reached the light exiting surface 20b at a smaller angle than the critical angle exits the light exiting surface 20b towards the liquid crystal panel 27. The light of which course has been altered by the light diffusion portions 22 to a course directed towards the surface opposite to the light exiting surface 20b is reflected by the light reflecting portion 23 towards the light exiting surface 20b and exits the light exiting surface 20b.
   The light diffusion portions 22 and the light reflecting portion 29 function as a light redirecting member.
   The third embodiment has an advantage described below in addition to the advantages (1) through (3), (5) through (10), and (12) through (14) of the first embodiment.
(16) Since the second area light source 15 surrounds the first area light source 14, the area light source apparatus 11 has a light emitting surface with a larger area than that of the first embodiment.
   An area light source apparatus 11 according to a fourth embodiment of the present invention will now be described with reference to Fig. 7. The fourth embodiment is different from the second embodiment in that the light guide plate 20 becomes thicker towards the light entering surfaces 20a. Other parts are basically the same as the second embodiment.
   The light exiting surface 20b of the light guide plate 20 includes prismatic protrusions 30 similar to those of the second embodiment. A light reflecting portion 29 is formed on the surface opposite to the light exiting surface 12b. No light diffusion portions 22 are provided. The grooves 31 are not shown in the drawing.
   The light guide plate 20 is formed to become gradually thinner from the light entering surfaces 20a towards the transparent substrate 12. Therefore, the light reflecting portion 29 is formed on each of the inclined surfaces of the light guide plate 20. Microscopically, the light reflecting portion 29 has a serrated cross section that becomes thicker from the transparent substrate 12 towards the light entering surface 20a.
   Light entering from the light entering surface 20a into the light guide plate 20 is affected by the light extracting surface 31a and waveguide surface 31b of the light reflecting portion 29 while traveling through the light guide plate 20 towards the transparent substrate 12 and this exits the light exiting surface 20b in the same manner as in the second embodiment.
   The fourth embodiment has the advantages described below in addition to those of the second embodiment.
(17) The surface on which the light reflecting portion 29 is defined is inclined so that the light reflecting portion 29 becomes closer to the light exiting surface 20b as it becomes farther from the light entering surface 20a. Therefore, a uniform amount of light exits the light exiting surface 20b.
(18) Since the light guide plate 20 becomes thicker towards the peripheral edge, a depression is formed in the surface opposite to the light exiting surfaces 12b and 20b. The depression accommodates wiring used to connect the electrodes 16 and 18 of the organic EL device 13 to the power source.

It should be apparent to those skilled in the art that the present invention may be embodied in many other specific forms without departing from the spirit or scope of the invention. Particularly, it should be understood that the present invention may be embodied in the following forms.

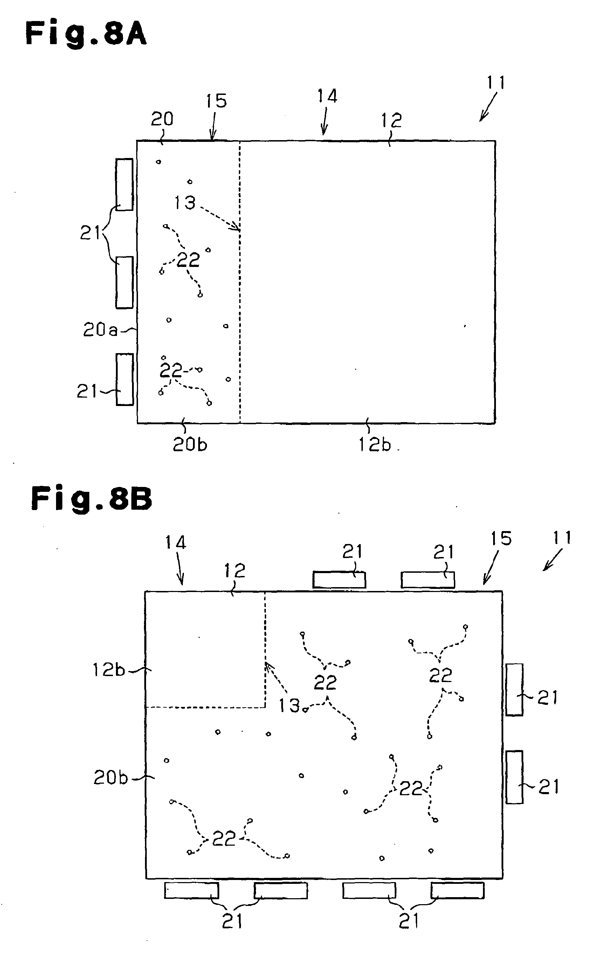

It is only required for the area light source apparatus 11 to include a first area light source 14 having an organic EL device 13 provided on the light entering surface 12a of a transparent substrate 12, and a second area light source 15 formed by a light source other than the organic EL device 13, with the area of the entire light emitting surface being larger than the area of the light emitting surface of the organic EL device 13. Therefore, the positional relationship between the first area light source 14 and the second area light source 15 is not limited to one in which the first area light source 14 is located between the second area light sources 15 or one in which the first area light source 14 is surrounded by the second area light source 15. For example, in a fifth embodiment shown in Fig. 8A, the second area light source 15 may be arranged on one side of the first area light source 14. Further, in a sixth embodiment shown in Fig. 8B, a first area light source 14 may be arranged in one corner and a second area light source 15 in other parts of an area light source apparatus 11 having a rectangular light emitting surface.

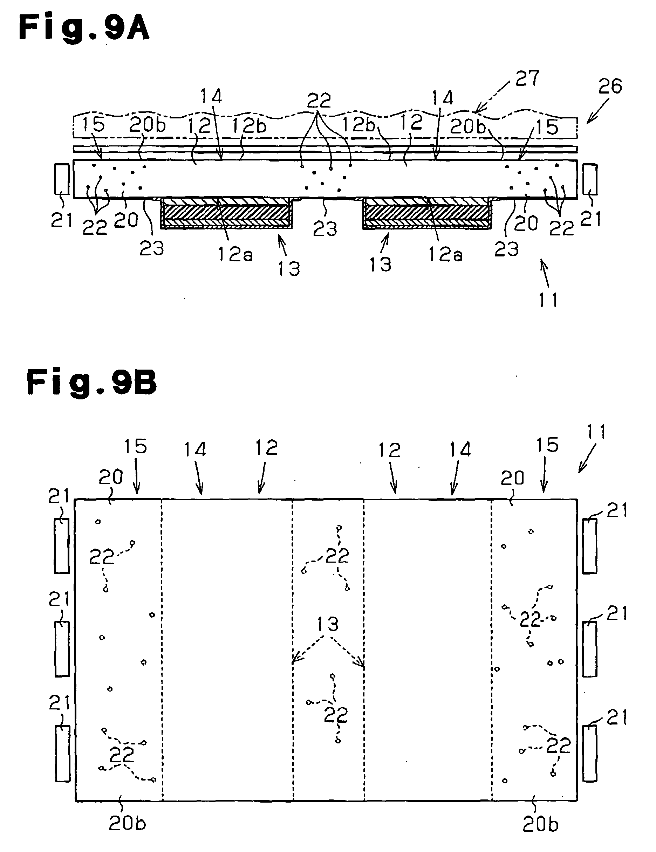

The area light source apparatus 11 may be provided with more than one organic EL device 13. For example, as a seventh embodiment shown in Figs. 9A and 9B, a plurality of organic EL devices 13 (two) may be provided on the light entering surface 12a of a transparent substrate 12, and light diffusion portions 22 are provided in the pact of the transparent substrate 12 between the parts on which these organic EL devices 13 are mounted. In this case, the area of the light emitting surface of the area light source apparatus 11 is further increased.

Each light diffusion portion 22 may be of any shape as long as it has an interface for diffusing light entering through the light entering surface 20a. For example, the light diffusion portion 22 may have an elongated linear shape extending in a direction perpendicular to the light guide plate 20.

The light diffusion portions 22 do not have to be formed through a laser marking method. For example, the light diffusion portions 22 may be formed by distributing beads or the like having a different refractive index from that of the light guide plate 20.

When no light reflecting portion 29 formed by a plurality of grooves 31 is provided as in the fourth embodiment and the light guide plate 20 is provided with light diffusion portions 22 and light reflecting portion 23 as in the first embodiment, the light guide plate 20 may be formed so that the thickness becomes smaller from the light entering surface 20a towards the transparent substrate 12. When employing the configuration where light diffusion portions 22 and a mirror-like light reflecting portion 23 are provided, the light guide plate 20 is preferably formed into a shape corresponding substantially to a wedge with a thickness that becomes gradually smaller from the light entering surface 20a towards the transparent substrate 12 when viewed macroscopically.

The light reflecting portion 23 provided on the opposite side of the light exiting surface 20b may have light diffusion means. Specifically, the light reflecting portion 23 is not limited to a flat mirror surface but may be a reflective surface for performing diffusive reflection.

In the configuration where light diffusion portions 22 are provided in the light guide plate 20 as in the first embodiment, a plurality of prismatic protrusions 30 or lens-like protrusions may be provided in parallel in place of the light diffusion portion 25 provided on the light exiting surface 20b.

In the configuration where a light reflecting portion 29 having grooves 31 is provided on the surface of the light guide plate 20 opposite to the light exiting surface 20b as in the second embodiment, a light diffusion portion 25 may be provided on the light exiting surface 20b by roughening the surface instead of providing the prismatic protrusions 30 or lens-like protrusions.

The light diffusion portion 25 provided on the light exiting surface 20b may be omitted.

The light reflecting film 24 formed on the end faces 12c and 20c of the transparent substrate 12 and light guide plate 20 may be omitted.

If the amount of light emitted from the part of the light exiting surface 12b corresponding to the organic EL device 13 is insufficient, the portion of the light exiting surface 12b corresponding to the organic EL device 13 may also be provided with a light diffusion portion 25 having a roughened surface.

The light diffusion portions 22 provided in the light guide plate 20 do not have to be distributed to ensure that light exits uniformly from the entire light exiting surface 20b, but may be distributed so that different amounts of light exit from the light exiting surface 20b.

Instead of using a white light emitting diode (LED) as the LED 21, three types of LEDs; a red LED, a blue LED, and a green LED may be used so that white light exits the light exiting surface 20b by the synthesis of three different color lights emitted by these LEDs (color mixing). If an area light source apparatus 11 having this type of configuration is employed as a backlight of a liquid crystal display using color filters for full color display, a display having clearer colors then when using a white LED is obtained.

The first area light source 14 and the second area light source 15 do not have to emit white light. The area light source apparatus 11 may be configured so that monochromatic light is emitted or so that several types of monochromatic light are combined to emit light of a color other than white. For example, the organic EL layer 17 and LEDs 21 may emit monochromatic light of red, blue, green, or yellow.

The shape of the transparent substrate 12 and organic EL device 13 as viewed from the side of the light exiting surface 12b does not have to be rectangular. For example, it may be a square, triangular, polygonal with five or more corners, circular, or arcuate.

The combined shape of the light guide plate 20 and transparent substrate 12 does not have to be similar to the shape of the transparent substrate 12. For example, the combined shape of the light guide plate 20 and transparent substrate 12 may be rectangular while the shape of the transparent substrate 12 and organic EL device 13 is circular or triangular, or the combined shape of the light guide plate 20 and transparent substrate 12 may be circular while each shape of the transparent substrate 12 and organic EL device 13 is rectangular or triangular.

The light source other than the organic EL device used as the second area light source 15 is not limited to an LED. For example, a cold cathode tube may be used as the light source. When using a cold cathode tube, the cold cathode tube is preferably arranged along the light entering surface 20a of the light guide plate 20.

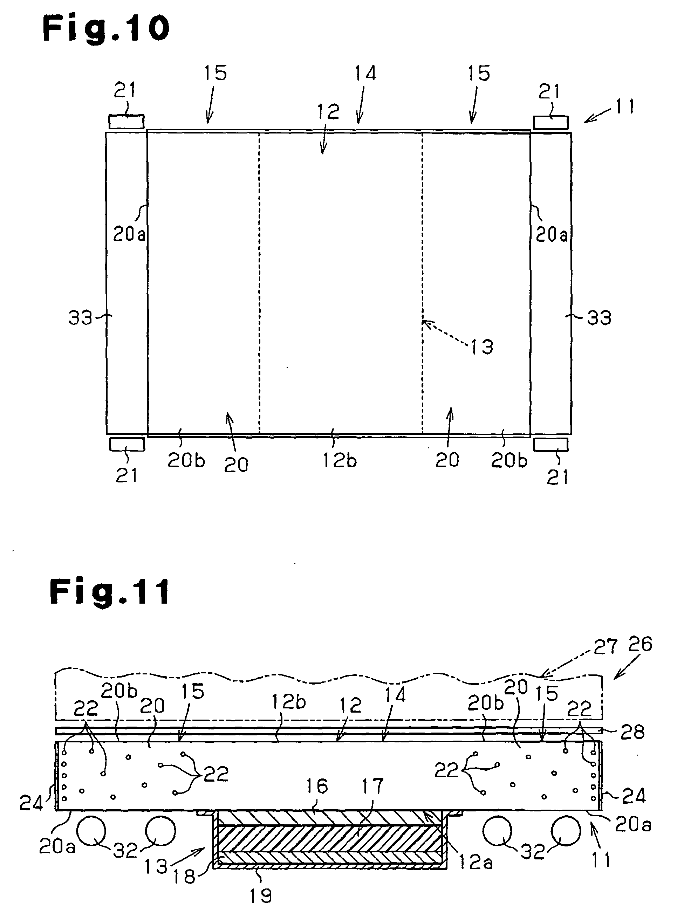

The configuration of the light guide plate 20 is not limited to those in the embodiments described above. The light guide plate 20 may have any of various conventionally known configurations. For example, in an eighth embodiment shown in Fig. 10, a light guide plate 20 for emitting planar light is combined with light guide rods 33, which are arranged along the light guide plate 20 and emit linear light by using LEDs 21 as a light source.

The transparent substrate 12 does not have to be formed integrally with the light guide plate 20. Instead, the first area light source 14 and the second area light source 15 may be formed separately, and then the transparent substrate 12 may be joined with the light guide plate 20 to form the area light source apparatus 11. If the joint part is dark, it is preferable that a light diffusion portion be provided at the boundary (joint) between the transparent substrate 12 and the light guide plate 20.

A light source other than the organic EL device 13 used for the second area light source 15 may not be arranged to face the end face of the light guide plate 20. For example, in a ninth embodiment shown in Fig. 11, the light source may be arranged to face the surface of the light guide plate 20 opposite to the light exiting surface 20b. In this case, light entering surface 20a of the light guide plate 20 is on the side opposite to the light exiting surface 20b. It is preferable to use a linear light source 32 as the light source other than the organic EL device 13.

A diffusion sheet 28 (dispersion sheet) may be provided on the light exiting surfaces 12b and 20b of the area light source apparatus 11. When the area light source apparatus 11 is used as a backlight for a liquid crystal display 26, the diffusion sheet 28, which is a separate component, does not have to be prepared.

The transparent conductive material for forming the first electrode 16 is not limited to ITO. For example, zinc oxide may be used instead.

The first electrode 16 may be formed from a metal layer that is extremely thin to provide transparency instead of a transparent material having electrical conductivity. Such thickness is no more than 50 nm, and is preferably in the range of 0.5 through 20 nm.

The first electrode 16 provided on the transparent substrate 12 may be a cathode and the second electrode 18 may be an anode. In this case, the structure of the organic EL layer 17 is modified accordingly. For example, the organic EL layer 17 may be composed of three layers: an electron injection layer, a light emitting layer, and a hole injection layer laminated in this order from the side of the first electrode 16, or of five layers; an electron injection layer, an electron transportation layer, a light emitting layer, a hole transportation layer, and a hole injection layer laminated in this order from the side of the first electrode 16.

The organic EL layer 17 may have either a single-layer structure of only a light emitting layer, or a multi-layer structure in which a light emitting layer is laminated with at least one of a hole injection layer, a hole transportation layer, a hole injection/transportation layer, a hole inhibition layer, an electron injection layer, an electron transportation layer, and an electron inhibition layer.

The transparent substrate 12 and the light guide plate 20 may be formed from a transparent plate of a resin, or a flexible transparent resin plate, instead of a glass substrate. A resin plate is lighter in weight than a glass substrate.

The application of the area light source apparatus 11 is not limited to a backlight. The area light source apparatus 11 may also be used as an illumination apparatus for other purposes.

The material for the electrode with a light reflecting property is not limited to aluminum. Chromium or other metals may also be used.

The first area light source 14 may be defined by an inorganic EL device instead of the organic EL device 13.

The present examples and embodiments are to be considered as illustrative and not restrictive, and the invention is not to be limited to the details given herein, but may be modified within the scope and equivalence of the appended claims.

An area light source apparatus (11) including a light emitting surface. The area light source apparatus is provided with a first area light source (14) including a transparent substrate (12), having a light entering surface (12a), and an EL device (13), arranged on the light entering surface. The EL device includes a light emitting surface from which light exits. A second area light source (15) includes LEDs (21). The light emitting surface of the area light source apparatus has an area greater than that of the light emitting surface of the EL device.

## Claims

1. An area light source apparatus including:
a first light emitting surface;
a first area light source including a transparent substrate, having a light entering surface, and an electroluminescent device, arranged on the light entering surface, the electroluminescent device including a second light emitting surface from which light exits; and
a second area light source including a light source device other than the electroluminescent device, the area light source apparatus **characterized in that** the first light emitting surface has an area greater than that of the second light emitting surface.

2. The apparatus according to claim 1, wherein the second area light source includes a light guide plate adjacent to the transparent substrate, the light guide plate having a plurality of end faces, and the light source device is arranged to face at least one of the end faces.

3. The apparatus according to claim 1, wherein the second area light source includes a light guide plate adjacent to the transparent substrate, wherein the light guide plate includes a light redirecting portion for altering the travel direction of light that enters the transparent substrate but does not travel in a direction to exit the first light emitting surface, to a direction in which the light exits from the first light exiting surface.

4. The apparatus according to any preceding claim, wherein the light source device is a light emitting diode.

5. The apparatus according to claim 1, wherein the first area light source includes opposite sides and the second area light source is arranged on each of the opposite sides of the first area light source.

6. The apparatus according to claim 5, wherein the second area light source includes a light guide plate adjacent to the transparent substrate, wherein the light guide plate becomes gradually thinner as the transparent substrate becomes closer.

7. The apparatus according to claim 2, wherein the transparent substrate is formed integrally with the light guide plate.

8. The apparatus according to claim 2, wherein the transparent substrate is defined in a first portion of a single transparent plate, and the light guide plate is defined in a second portion of the single transparent plate.

9. The apparatus according to any preceding claim, wherein the first area light source and the second area light source each emit white light.

10. The apparatus according to claim 9, wherein the light source device includes three types of LEDs respectively emitting red light, blue light, and green light, the light source device synthesizing the light emitted from the three different types of LEDs to emit white light.

11. The apparatus according to any preceding claim, wherein the electroluminescent device is an organic electroluminescent device.

12. The apparatus according to claim 1, further comprising:
a diffusion sheet covering the first light emitting surface of the area light source apparatus.

13. A liquid crystal display comprising a backlight consisting of the area light source apparatus according to any preceding claim.
